# DEMANDE DE BREVET EUROPEEN

(11) **EP 0 580 540 A1**
(43) Date de publication de la demande: **26.01.1994**
(21) Numéro de dépôt: 93500094.3
(22) Date de dépôt: 25.06.1993
(51) Int. Cl.: F16L 23/032, F16L 23/12

(54) **Moyens pour le raccordement de tuyaux métalliques**

(30) Priorité: 26.06.1992 FR 9207877
(71) Demandeur: CONDUCTOS DE VENTILACION, S.A. POLIGONO INDUSTRIAL No 2, E-28936 Mostoles, Madrid (ES)
(72) Inventeur: Sanchez Aguilera, Heliodoro, E-28936 Mostoles (Madrid) (ES)
(74) Mandataire: Primo de Rivera y Urquijo, Jose Antonio

(57) **Abrégé**

Moyens pour le raccordement de tuyaux métalliques pourvus de couronnes (3-4) disposées aux embouchures des tuyaux (1-2) et constitués de profils creux (5-6) s'emboîtant para assemblage à bout mâle de emboîtement (7-8) et comportant des moyens externes de recouvrement (9) qui sont enveloppéset raccordés à l'aide d'une bride ou frette circulaire (11) munie de moyens propres de tension et de moyens essentiels pour le racordement et la fermeture ou serrage progressif (12) (12A) des moyens de recouvrement qui comportent, facultativement, des trous, des ouvertures, des échancrures ou autres pour éviter tout pon thermique entre les couronns (3-4) et ladite bride ou frette (11). Et s'appliquant tout spécialement aux conduites isolées pour le chauffage, la climatisation, l'air conditionné et analogues.

## Description

L'invention concerne des moyens de raccordement de tuyaux métalliques, notamment de tuyaux métalliques á double paroi, lisses, hélicoïdaux, nervures, striés, etc., pour air conditionné et chauffage et, plus spécialement, un systeme de bride ou frette d'un développement spécial. Mode de réalisation qui assure le raccordement des tuyaux par assemblage à bout mâle et emboîtemet faisant que les tuyaux s'emboîtent l'un dans l'autre, la jonction étant assurée par la bride ou frette qui recouvre les embouchures de tuyaux.

L'invention vise á fournir un système simple, efficace et esthétique de raccordement de tuyaux circulaires d'air conditionné, de chauffage ou analogue. Tuyaux pourvus d'extrémités s'emboîtant l'une dans l'autre par bout mâle et emboîtement, qui s'emmanchent et s'ajustent l'un dans l'autre en les dotant de moyens appropiés pour recevoir une bride ou frette d'assemblage permettant de les brider périphériquement et de les raccorder fortement sous l'effet d'un recouvrement progressif.

De même, le moyen de raccordement s'avère esthétiquement discret, la partie saillante ou renflement étant très peu prononcée, les moyens d'assemblage offrant en outre la double possibilité d'être eux-mème pourvus de moyens permettant d'éviter tout pont thermique susceptible de se produire dans les conduites de chauffage.

### ETAT DE LA TECHNIQUE

Dans l'état de la technique il existe une tendance généralisée à des conduites aériennes, légères et isolées pour des installations d'air conditionné, climatisé ou de chauffage, aux sections aussi bien circulaires que carrées, rectangulaires ou autres.

En ce qui concerne les sections dites planes de conduites de ce genre et indépendamment des systèmes dépassés, les articles sont constitués par des corps légers en matière isolante munis de cadres ou châssis entourant l'embouchure de sorte que, mis en vis-à-vis, ils soient raccordés par des profils femelles guidés de chaque coté de ceux-ci (voir IT N° 47.923/90 de PALL SRL) et (U/ES Nº 89/1.385).

Quant aux installations à conduites circulaires. les moyens les plus courants sont:

Dans le domaine de l'air conditionné et de la ventilation, on emploie le système de raccordement à bout mâle et emboîtement en appliquant du mastic pour obtenir une bonne étanchéité, ou bien en intercalant un joint en caoutchouc qui, du fait de la nature du matériau, n'est pas valable en présence de chaleur dans la coduite.

Dans le domaine du chauffage, on emploie des cheminées modulaires dont il existe dans le marché différents systémes de raccordement, les plus courants étant les raccordements à bout mâle et emboitement, bien que la plupart présentent de gros inconvénients ou posent des problèmes.

Parmi ceux-ci nous pouvons citer les systèmes de la firme anglaise RITE-VENT LTD, marque "DINAK", qui n'utilisent pas de couronnes, le tuyau intérieur et l'extérieur étant raccordés par des pattes ou ergots.

Les systèmes de "CARBOFUEL", en Italie, dans lesquels la chaleur est transmise par les couronnes de raccordement qui forment un pont thermique avec l'extérieur.

Le système METU-SYSTEME, d'Allemagne, n'est pas valable pour des tuyaux à double paroi.

En règle générale, les systèmes précités sont monovalents, c'est-à-dire ne pouvant pas être utilisés indistinctement pour la conduction de fluides á différentes températures -froid-chaud- indépendamment des caractéristiques techniques requises pour assurer cette ambivalence qui constitue, en résumé, l'un des avantages substantiels de l'objet de l'invention proposée ici.

### ACTIVITE INVENTIVE

L'invention se propose de doter les ambouchures circulaires des tuyaux ou conduites d'un isolement ou garniture d'étanchéité aux profils à configuration annulaire (frette annulaire), avec une section pour recevoir la garniture ou isolement, une partie entrante pour définir la zone femelle de raccordement du tuyau et une couronne faisant saillie extérieurement sur toute la périphérie du profil pour le recouvrement de la couronne opposée.

Une autre embouchure annulaire composée d'un profil analogue au précédent mais avec une partie saillante pour définir la zone mâle de raccordement du tuyau et, de même, avec une couronne saillante analogue à la précédente.

Elle comporte également une bride ou frette enveloppante, circulaire, avec des moyens facultatifs de tension -raccord rapide ou à vis en fonction du diamètre- pourvue de moyens pour franchir l'épaulement des couronnes des profils annulaires des tuyaux en vis-á-vis, avec une définition mécanique pour assurer un recouvrement progressif du raccordement des tuyaux proportionnel à la tension ou fermeture de la bride ou frette.

Additionnellement, l'invention prévoit aussi des moyens sur les couronnes de raccordement, plus concrètement dans la zone intermédiaire, pour éviter tout pont thermique entre la paroi intérieure du tuyau et la bride ou la paroi extérieure du tuyau se produisant dans les conduites de chauffe proportionnellement au coefficient thermique du fluide circulant en évitant ainsi les inconvénients d'un contact accidentel ou d'une détérioration, sous l'effet de la chaleur, de la bride ou de la paroi extérieure du tuyau.

### DESCRIPTION DE L'INVENTION

L'une des caractéristiques des embouchures ou couronnes annulaires est qu'il s'agit de profils creux de configuration brisée. La zone creuse servant de logement au corps isolant ou garniture du tuyau de sorte que le bord intérieur reste en dedans de la tôle intérieure du tuyau et que le bord extérieur soit recouvert par le revêtement en tôle externe du tuyau, la fixation étant assurée par des vis filetées pour tôle.

Un autre détail est que la configuration extérieure de chaque couronne est définie par un échelon ou parlier saillant -complémentaire du précédent sur la couronne femelle- qui, en vis-á-vis, s'accouplent en un assemblage parfait.

Une autre caractéristique des couronnes -femelle et mâle- est qu'elles comportent un épaulement ou rebord saillant s'étendant périphériquement autour du profil des couronnes qui, en position d àssemblage, sont recouvertes ou se font face en formant une nervure périphérique pour faciliter le raccordement des deux parties du tuyau par tension de la bride ou frette annulaire.

Un autre détail est que ladite bride annulaire (frette de bridage) présente, symétriquement et concentriquement, une nervure creuse proéminente - estampée de dedans en dehors- à section transversale trapézoïdale suffisante pour s'emboîter à la fois sur les deux rebords saillants des couronnes de sorte qu'en se tendant, ils copriment progressivement le recouvrement entre les deux en renforçant ainsi le raccordement des couronnes et/ou des sections du tuyau.

Une autre caractéristique de l'invention est que, sur le collet de la saillie emboitable de la couronne mâle est intercalé un joint plat d'étanchéité pour assurer l'herméticité du raccordement entre les conduites.

Un autre détail de l'invention est que la partie centrale des couronnes présente, facultativement et avantageusement, des trous, évidements ou fenêtres ménagés à la surface de celles-ci pour éviter tout pont thermique susceptible de se produire entre lesdites couronnes et la frette de bridage et de raccordement.

Les carctéristiques essentielles de l'invention apparaitront plus clairement à l'aide de la description qui va suivre, faite en référence à la planche de dessins annexée sur laquelle, de façon quelque peu schématique et uniquement à titre d'exemple, sont représentés les détails préférés de l'invention.

Sur les dessins:

La figure 1, est une vue en coupe verticale partielle de deux conduites avec les couronnes d'assemblage selon l'invention.

La figure 2, est une vue en élévation latérale de la bride ou frette enveloppante.

La figure 3, est une vue en coupe suivant la ligne I-I de la figure 2.

La figure 3A, est analogue à la précédente en position fermée.

La figure 4, est une vue en coupe transversale du jeu de couronnes.

La figure 5, est un détail en éleation arrière de la couronne femelle vue suivant la flèche (A).

### DESCRIPTION DES DESSINS

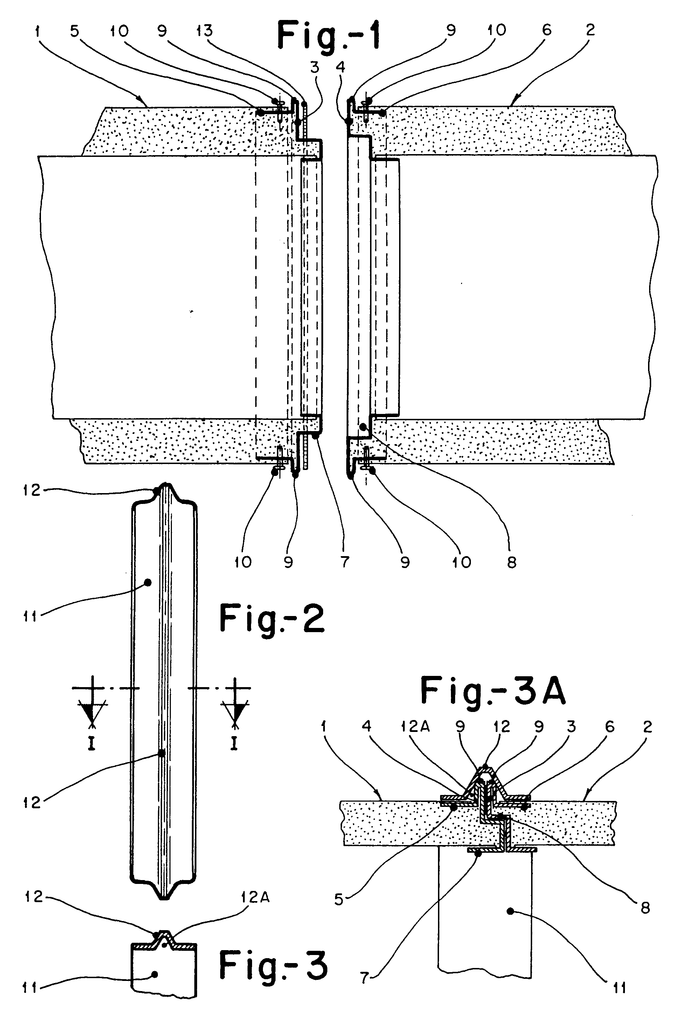

La figure 1 montre deux sections de conduite en phase d'assemblage ou de raccordement -1- et -2-, respectivement pourvues à leurs extremités ou embouchures de couronnes (3) et (4) respectivement màle et femelle et emboîtables l'une dans l'autre.

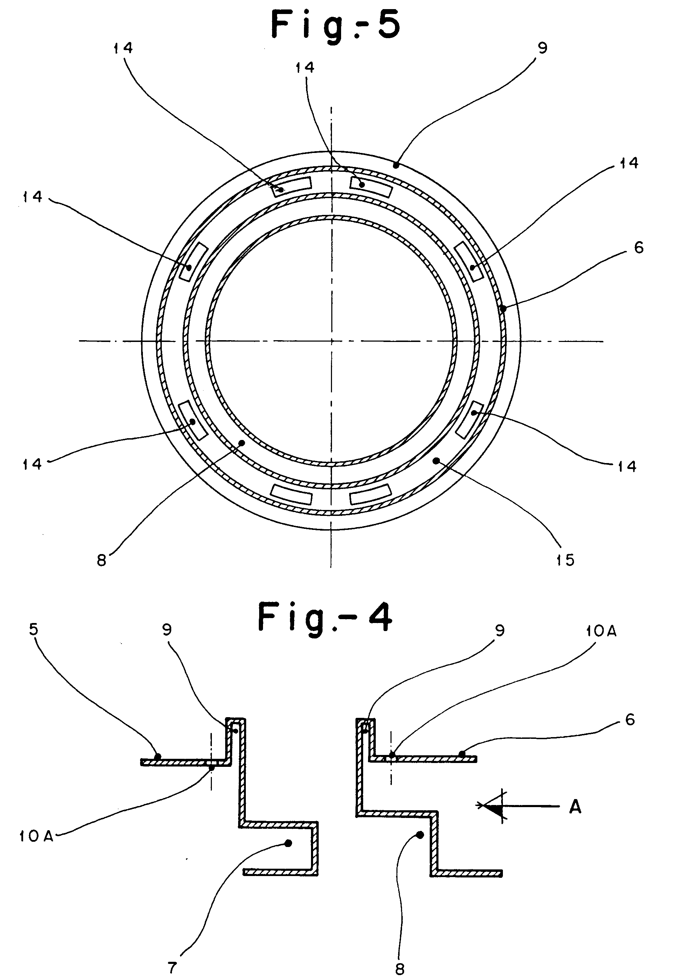

Les couronnes (3) et (4) sont des profils creux, mâle (5) et femelle (6), dont la configuration intérieure leur permet de s'adapter à la conduite (1) et (2) en s'emboîtant par le diamètre intérieur et fixées de l'extérieur sur la tôle du tuyau à l'aide de tire-fonds filetés pour tôle (10) passant à travers des trous (10A) (Fig. 4) ménagés sur le corps du profil (5) (6).

Le profil (5) de la couronne mâle (3) présente une partie saillante ou épaulement (7) s'emboîtant par assemblage dans la partie rentrante (8) du profil (6) de la couronne femelle (4).

Les deux couronnes (3) et (4) se caractérisent en ce qu'elles comportent un rebord saillant (9) s'entendant périphériquement sur le pourtour des deux couronnes (3) et (4) pour recouvrir l'assemblage (Fig. 3A) et se raccorder fortement au moyen de la bride ou frette (11) (Fig. 2) en y intercalant un joint torique plat d'étanchéité (13) monté sur le col de l'épaulement (7) de la couronne mâle (3).

La bride (11) en question est pourvue d'une nervure creuse concentrique (12) s'éntendant périphériquement sur le pourtour de la bride (11), à section intérieure (12A) trapézoïale ou analogue, et qui, lorsque la bride (11) se tend par ses propres moyens -optionnels-, relie progressivement le recouvrement entre les rebors (9) des couronnes (3) et (4), en renforçant ainsi le raccordement.

Complémentairement, pour des installations de chauffage, les couronnes (3) et (4) présentent dans leur partie centrale (15) (Fig. 5) des évidements, des trous, des perforations, des ouvertures ou autres (14) ménagés dans ladite partie centrale (15) des couronnes (3-4) pour éviter tout pont thermique de sorte que la chaleur du fluide circulant à l'intérieur (8) du tuyau ne soit transmise ni à la bride ni à la paroi extérieure du tuyau (6) à travers les couronnes (3-4).

La partie intérieure du tuyau (6), du fait de n'être qu'emboîtée entre les couronnes (3-4), sans aucun moyen de fixation, fait que le matériau puisse se dilater (conduction de chaleur) ou se contracter (conduction de froid) sans que s'en trouve altérée la structure du tuyau.

Les couronnes (3-4) sont pourvues de trous (10A) permettant le passage des tire-fonds filetés pour tòle (10) pour fixer les couronnes sur le corps des tuyaux (1-2).

La nature de l'invention venant d'être suffisamment décrite, nous nous bornerons à signaler à toutes fins utiles que celle-ci ne se limite pas strictement aux seuls détails de cet exposé mais qu'au contraire toutes les modifications jugées pertinentes pourront lui ètre apportées dans la mesure où les caractéristiques essentielles de celle-ci, et qui sont revendiquées ci-aprés, ne s'en trouvent pas affectées.

## Revendications

**1.-** Moyens pour le raccordement de tuyaux métalliques à double paroi pourvus ou remplis de matériaux d'isolement por le chauffage, la climatisation ou l'air conditionné (1-2), équipés à leurs embouchures de moyens assurant l'emboîtement réciproque des sections des tuyaux (1-2), se caractérisant en ce qu'ils sont composés de couronnes métalliques (3-4), mâle et femelle respectivement, constitués d'un profil creux (5-6) chacun s'adaptant à l'embouchure des tuyaux à double paroi (1-2), avec des moyens de recouvrement (9) et des moyens de bridage (11) pour assurer le raccordement étanche des parties du tuyau (1-2), en intercalant un joint torique plat (13) entre l'emboîtement des parties (1-2).

**2.-** Moyens pour le raccordement de tuyaux métalliques comportant des moyens de fixation (10-10A) des couronnes (3-4) sur les tuyaux (1-2) selon la revendication 1, se caractérisant en ce qu'il s'agit de simples vis filetées pour tôle.

**3.-** Moyens pour le raccordement de tuyaux métalliques comportant des moyens de recouvrement (9) des couronnes (3-4) selon la revendication 1, se caractérisant en ce qu'il s'agit de rebords ou talons pliés tangentiels et en saillie du bord extérieur des couronnes (3-4) qui s'étendent périphériquement sur tout le pourtour de celles-ci.

**4.-** Moyens pour le raccordement de tuyaux métalliques comportant des couronnes d'assemblage (3-4) selon la revendication 2, se caractérisant en ce que, dans les cas de chauffage, optionnellement, la zone centrale ou intermédiaire (15) de celles-ci est pourvue d'évidements, d'ouvertures, de fenêtres ou autres (14) pour éviter tout pont thermique.

**5.-** Moyens pour le raccordement de tuyaux métalliques comportant des moyens de bridage ou frettage (11) selon la revendication 1, se caractérisant en ce qu'ils comportent une bride ou frette circulaire (9) pourvue centralement et à équidistance d'une nervure saillante (12) intérieurement creuse (12A), au profil de préférence trapézoîdal, qui s'étend périphériquement sur tout le pourtour de la bride.

**6.-** Moyens pour le raccordement de tuyaux métalliques.
